# EUROPEAN PATENT APPLICATION

(11) **EP 4 442 613 A1**
(43) Date of publication of application: **09.10.2024**
(21) Application number: 22901289.3
(22) Date of filing: 29.11.2022
(51) Int. Cl.: B65G 1/137, B65G 1/00, G06Q 10/08

(54) **INFORMATION PROCESSING DEVICE, INFORMATION PROCESSING METHOD, AND PROGRAM**

(30) Priority: 03.12.2021 JP 2021197085
(71) Applicant: Kabushiki Kaisha Toshiba, Tokyo 105-0023 (JP); Toshiba Infrastructure Systems & Solutions Corporation, Kawasaki-shi, Kanagawa 212-0013 (JP)
(72) Inventor: YAMAMOTO, Sayo, Kawasaki-shi, Kanagawa 212-0013 (JP)
(74) Representative: Horn Kleimann Waitzhofer Schmid-Dreyer Patent- und Rechtsanwälte PartG mbB
(86) International application number: PCT/JP2022/043947
(87) International publication number: WO 2023/100857

(57) **Abstract**

An information processing apparatus, an information processing method, and a program enabling storage of articles in a rack on the basis of property of the articles are provided. According to embodiments, the information processing apparatus includes an interface and a processor. The interface acquires warehousing information indicating articles to be stored in a rack. The rack includes two or more sections having different heights, and is to be carried by an automated guided vehicle. The processor acquires property information indicating property of each of the articles, and generates planning information indicating the sections to store the articles, based on the property information.

## Description

### FIELD

Embodiments described herein relate generally to an information processing apparatus, an information processing method, and a program.

### BACKGROUND

In recent years, provided are systems in which racks storing articles are carried to picking stations using automated guided vehicles. At the picking stations, operators or robots pick up articles from the racks carried by the automated guided vehicles. In addition, in the system, warehoused articles are stored in racks.

Each of the automated guided vehicles accelerates and decelerates in a state of being loaded with a rack storing articles. For this reason, if the center of gravity of the rack is high, the rack may sway and fall out of the automated guided vehicle. In addition, if the center of gravity of the rack is high, the rack easily falls down in disasters, such as earthquakes.

In conventional art, such systems have a problem that it is impossible to store articles in racks according to properties of articles, such as weight.

### CITATION LIST

### PATENT LITERATURE

Patent Literature 1: Japanese Patent Application Publication No. 2019-159737

### SUMMARY

### TECHNICAL PROBLEM

To solve the problem described above, embodiments provide an information processing apparatus, an information processing method, and a program enabling storage of articles in racks on the basis of properties of the articles.

### SOLUTION TO PROBLEM

According to embodiments, the information processing apparatus includes an interface and a processor. The interface acquires warehousing information indicating articles to be stored in a rack. The rack includes two or more sections having different heights, and is to be carried by an automated guided vehicle. The processor acquires property information indicating property of each of the articles, and generates planning information indicating the sections to store the articles, based on the property information.

### BRIEF DESCRIPTION OF THE DRAWING(S)

FIG. 1 is a diagram schematically illustrating a configuration example of a control system according to an embodiment.
FIG. 2 is a block diagram illustrating a configuration example of the control system according to an embodiment.
FIG. 3 is a block diagram illustrating a configuration example of a planning apparatus according to an embodiment.
FIG. 4 is a diagram schematically illustrating a configuration example of AGV racks according to an embodiment.
FIG. 5 is a diagram illustrating a configuration example of rack information according to an embodiment.
FIG. 6 is a diagram illustrating a configuration example of property information according to an embodiment.
FIG. 7 is a diagram illustrating a configuration example of correspondence information according to an embodiment.
FIG. 8 is a diagram illustrating a configuration example of rack allocation information according to an embodiment.
FIG. 9 is a diagram illustrating a configuration example of rack allocation information according to an embodiment.
FIG. 10 is a diagram illustrating a configuration example of rack allocation information according to an embodiment.
FIG. 11 is a diagram illustrating a configuration example of planning information according to an embodiment.
FIG. 12 is a diagram illustrating an arrangement example of AGV racks according to an embodiment.
FIG. 13 is a flowchart illustrating an operation example of the planning apparatus according to an embodiment.

### DETAILED DESCRIPTION

The following is an explanation of an embodiment with reference to drawings.

A control system according to an embodiment picks up articles from racks in a logistic system or the like. The control system carries racks to picking stations using automated guided vehicles (AGV). The control system picks up articles from the racks at the picking stations. The control system causes operators or robots to pick up the articles from the racks.

In addition, the control system stores warehoused articles in racks. The control system determines the racks to store the articles and arrangement of the racks and the like, on the basis of properties of the warehoused articles. The control system carries the racks to store the articles to the picking stations using the AGVs. The control system stores the articles in the racks at the picking stations. The control system causes the operators or the robots to store the articles in the racks. The control system arranges the racks storing the articles in predetermined positions using the AGVs.

For example, the control system is used in a logistic center or a warehouse.

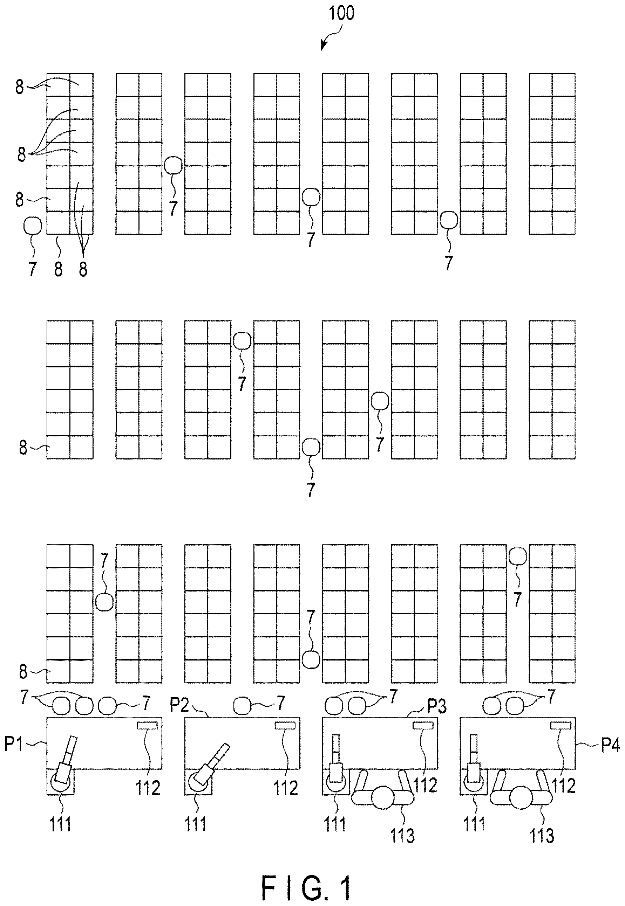

FIG. 1 is a diagram illustrating a configuration example of a control system 100 according to the embodiment.

As illustrated in FIG. 1, the control system 100 includes picking stations P (P1 to P4), AGVs 7, AGV racks 8, picking robots 111, and display devices 112, and the like.

Each of the picking stations P1 to P4 is provided with a picking robot 111 and a display device 112. At each of the picking stations P1 to P4, the control system can operate the picking robot 111 and pick up articles with the picking robot 111. The control system can also stop operation of the picking robot 111 and distribute staffs 113 to cause the staffs 113 to pick up articles. Each of the staffs 113 can handle articles by visually observing an article handling schedule or the like displayed on the display device 112. The display device 112 may be a wireless communication terminal assigned to the staff 113.

In addition, the picking stations P1 to P4 may be provided with the respective display devices 112, and picking robots 111 may be mounted at some of the picking stations. In this case, the picking stations provided with no picking robots 111 are used as picking stations for staffs 113. The picking stations provided with the picking robots 111 can be used as picking stations for either picking robots 111 or staffs 113.

The control system may include a plurality of cameras. In addition, one or some of the cameras may be provided as fixed camera(s) and the rest of them may be provided as mobile camera(s). A fixed camera is a camera fixed to, for example, the ceiling, the wall surface, and/or an upper surface and a side surface for the picking stations P1 to P4, photographing the whole warehouse and articles handled in the warehouse, and outputting the photographed data in real time. The image data includes photographing date and time data (including photographing time) and photographed image data. The photographed image data is still image data and moving image data. In addition, the fixed camera may rotate vertically and horizontally on the basis of an imaging control signal from the host management apparatus 1 described later. The fixed camera rotating vertically and horizontally enables monitoring of the inside of the warehouse over a wide range.

The AGVs 7 operate on the basis of control signals from an AGV controller 4 described later. For example, each of the AGVs 7 runs toward a designated loading position, and lifts an AGV rack 8 at the designated loading position. Each of the AGVs 7 runs toward a designated unloading position, and unloads the AGV rack 8 at the designated unloading position.

The AGV racks 8 are racks storing articles therein. Each of the AGV racks 8 includes two or more sections having different heights. For example, each of the AGV racks 8 is formed of a plurality of tiers.

In addition, each of the AGV racks 8 stands erect on four columns. The undershelf height (height from the floor surface to the bottom plate of the rack) of the AGV racks 8 is higher than the height of the AGVs 7. This enables the AGVs 7 to crawl under the AGV racks 8. Each of the AGVs 7 having crawled under the AGV rack 8 lifts the AGV rack 8 by its pusher to the extent in which the tips of the columns are separated from the floor surface by several centimeters, and runs in a state of lifting the AGV rack 8. In this manner, the AGV 7 carries the AGV rack 8.

In addition, rack identification information readable with a fixed camera or a mobile camera or the like may be attached to each of the AGV racks 8. Article identification information readable with a fixed camera or a mobile camera may be attached to articles. For example, the rack identification information and the article identification information are bar codes and/or two-dimensional codes. The control system may include a plurality of readers to read the rack identification information and the article identification information, separately from the fixed camera or the mobile camera.

The picking stations P1 to P4 receive the AGV racks 8 carried by the AGVs 7. Articles are stored in the AGV racks 8 received by the picking stations P1 to P4. If article handling with the picking robot 111 is designated, the picking robot 111 grips and picks up the articles stored in the AGV racks 8. If article handling by the staff 113 is designated, the distributed staff 113 holds and picks up the articles stored in the AGV racks 8. Each of the display devices 112 provided to correspond to the picking stations P1 to P4 displays information supporting the picking work of the staff 113, such as an image of the article to be handled and the article identification information thereof, in addition to the article handling schedule. The staff 113 visually observes the display contents of the display device 112, and picks up the article.

In addition, the picking stations P1 to P4 may store articles in the AGV racks 8 using the picking robots 111 or the staffs 113.

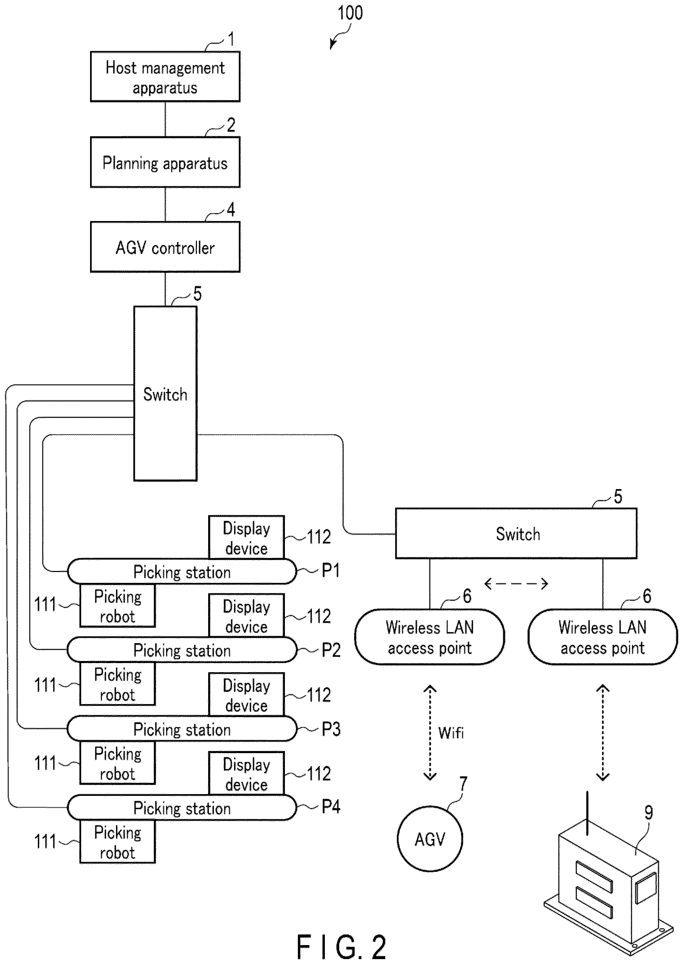

FIG. 2 is a block diagram illustrating a configuration example of a controlling system of the control system 100 according to the embodiment.

As illustrated in FIG. 2, the control system 100 includes a host management apparatus 1, a planning apparatus 2, an AGV controller 4, a switch 5, wireless LAN access points 6, the AGVs 7, charging station 9, the picking robots 111, the display devices 112, and the picking stations P1 to P4.

The host management apparatus 1 is called "Warehouse Management System (WMS)", and can be achieved with one or a plurality of computers. The host management apparatus 1 stores article management information relating to articles stored in the warehouse and the like. The article management information indicates articles stored in each AGV rack 8.

The host management apparatus 1 acquires an order indicating an article to be warehoused from an external device. The host management apparatus 1 generates warehousing information indicating the article to be warehoused, on the basis of the order. The host management apparatus 1 outputs the warehousing information to the planning apparatus 2.

The planning apparatus 2 (information processing apparatus) is called "Warehouse Execution System (WES)", and can be achieved with one or a plurality of computers. The planning apparatus 2 is connected to the host management apparatus 1. The planning apparatus 2 generates planning information indicating a section (such as a tier) of the AGV rack 8 to store the article to be warehoused and the position at which the AGV rack 8 storing the article, on the basis of the warehousing information and the like. The planning apparatus 2 will be described in detail later.

The AGV controller 4 is called "Warehouse Control System (WCS)", and can be achieved with one or a plurality of computers. The AGV controller 4 is connected to the planning apparatus 2. The AGV controller 4 is also connected to the picking stations P1 to P4 with the switch 5. The AGV controller 4 is also connected to the wireless LAN access points 6 via the switch 5.

The AGV controller 4 carries the AGV racks 8 to store articles to be picked up to the picking stations P1 to P4 using the AGVs 7. After picking is finished, the AGV controller 4 carries the AGV racks 8 to their original positions using the AGVs 7.

The AGV controller 4 also acquires and stores the planning information. The AGV controller 4 calls the AGV racks 8 to store the articles to be warehoused to the picking stations P1 to P4 using the AGVs 7, on the basis of the planning information and the like. Specifically, the AGV controller 4 controls the AGVs 7 to deliver the respective AGV racks 8 to the picking stations P1 to P4.

In addition, the AGV controller 4 arranges the AGV racks 8 storing articles to predetermined positions using the AGVs 7, on the basis of the planning information and the like.

The charging station 9 includes a power output unit. Each of the AGVs 7 includes a power input unit and a battery. The charging station 9 supplies power output from the power output unit to each AGV 7. Each AGV 7 supplies the power input via the power input unit to the battery. For example, the height of the power output unit from the floor surface is the same as the height of the power input unit of each AGV 7 from the floor surface. Each AGV 7 runs to the position corresponding to the power output unit of the charging station 9 on the basis of control of the AGV controller 4, and connects the power input unit thereof to the power output unit to receive power supply. Connection between the power input unit and the power output unit may be any of contact or noncontact connection.

The wireless LAN access points 6 transmit and receive data to and from communication devices, such as the AGVs 7 and the charging station 9. In addition, if the control system includes a fixed camera or a mobile camera, the wireless LAN access points 6 transmit and receive data to and from the fixed camera and the mobile camera. The switch 5 selects the destination of the received data, and transmits the data to the selected destination.

The following is an explanation of the planning apparatus 2.

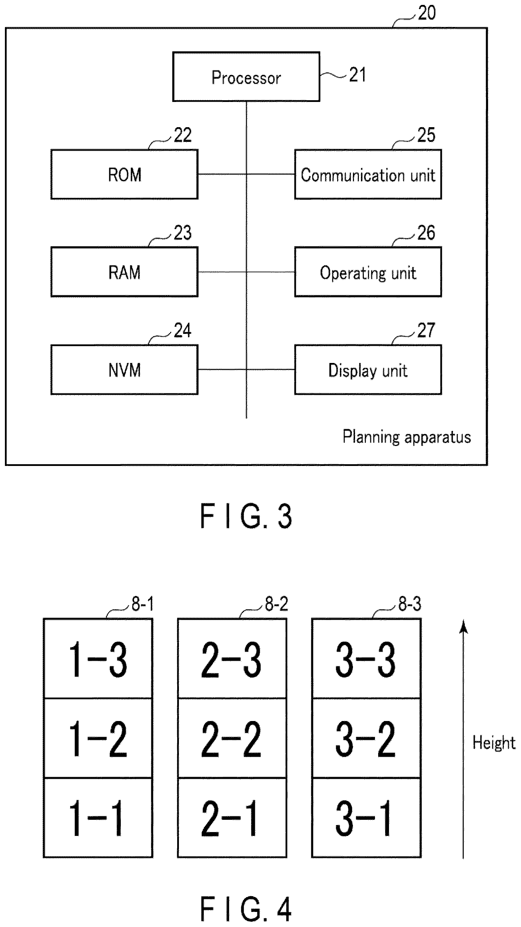

FIG. 3 illustrates a configuration example of the planning apparatus 2 according to the embodiment. FIG. 3 is a block diagram illustrating a configuration example of the planning apparatus 2. As illustrated in FIG. 3, the planning apparatus 2 includes a processor 21, a ROM 22, a RAM 23, a NVM (nonvolatile memory) 24, a communication unit 25, an operating unit 26, and a display unit 27, and the like.

The Processor 21, the ROM 22, the RAM 23, the NVM 24, the communication unit 25, the operating unit 26, and the display unit 27 are mutually connected via a data bus or the like.

The planning apparatus 2 may include any necessary structure in addition to the configuration illustrated in FIG. 3, and a specific structure may be excluded from the planning apparatus 2.

The processor 21 has a function of controlling operations of the whole planning apparatus 2. The processor 21 may include an internal cashe and various interfaces and the like. The processor 21 achieves various types of processing by executing programs stored in advance in the ROM 22 or the NVM 24.

Part of various functions achieved by execution of programs with the processor 21 may be achieved with a hardware circuit. In this case, the processor 21 controls a function executed with the hardware circuit.

The ROM 22 is a nonvolatile memory storing a control program and control data and the like in advance. The control program and the control data stored in the ROM 22 are incorporated in advance according to the specifications of the planning apparatus 2.

The RAM 23 is a volatile memory. The RAM 23 temporarily stores data being processed with the processor 21. The RAM 23 stores various application programs on the basis of commands from the processor 21. The RAM 23 may also store data necessary for execution of the application programs and execution results of the application programs and the like.

The NVM 24 is a nonvolatile memory to which data is writable and rewritable. For example, the NVM 24 is formed of a HDD, an SSD, or a flash memory or the like. The NVM 24 stores a control program, applications, and various data according to the operation use of the planning apparatus 2.

The NVM 24 stores in advance rack information indicating the sections (such as tiers) in which the AGV rack 8 stores the articles. The rack information will be described in detail later.

The communication unit 25 is an interface to transmit and receive data to and from the host management apparatus 1 and the AGV controller 4 and the like. The communication unit 25 is connected to the host management apparatus 1 and the AGV controller 4 and the like. For example, the communication unit 25 is an interface supporting wired or wireless LAN connection.

The communication unit 25 may be formed of an interface connected to the host management apparatus 1 and an interface connected to the AGV controller 4.

The operating unit 26 receives various operation inputs from the operator. The operating unit 26 transmits signals indicating the input operations to the processor 21. For example, the operating unit 26 is formed of a mouse, a keyboard, or a touch panel or the like.

The display unit 27 displays image data from the processor 21. For example, the display unit 27 is formed of a liquid crystal monitor. If the operating unit 26 is formed of a touch panel, the display unit 27 may be formed as one unitary piece with the touch panel serving as the operating unit 26.

The following is an explanation of the rack information.

Herein, the rack information indicates sections of the AGV racks 8-1 to 8-3 as illustrated in FIG. 4. In the example illustrated in FIG. 4, the AGV rack 8-1 includes three sections (for example, tiers) having different heights. Specifically, the AGV rack 8-1 includes sections 1-1, 1-2, and 1-3.

Each of the sections 1-1 to 1-3 stores articles.

The section 1-1 is formed at the bottom (at the lowermost stage) in the AGV rack 8-1.

The section 1-2 is formed on the section 1-1 in the AGV rack 8-1. Specifically, the section 1-2 is formed in the middle (between the section 1-1 and the section 1-3).

The section 1-3 is formed at the top (at the uppermost stage) in the AGV rack 8-1.

Specifically, the sections 1-1 to 1-3 are formed in this order from the bottom to the top.

The AGV rack 8-2 includes sections 2-1 to 2-3.

The sections 2-1 to 2-3 are formed in this order from the bottom to the top, in the same manner as the sections 1-1 to 1-3.

The AGV rack 8-3 includes sections 3-1 to 3-3.

The sections 3-1 to 3-3 are formed in this order from the bottom to the top, in the same manner as the sections 1-1 to 1-3.

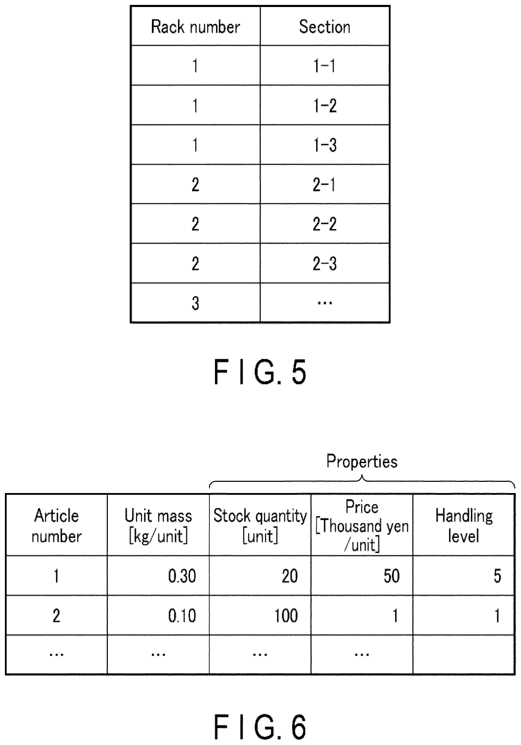

FIG. 5 illustrates a configuration example of the rack information.

As illustrated in FIG. 5, the rack information stores items "rack number" and "section" in association with each other.

The "rack number" indicates the number identifying the AGV rack 8. Herein, the number "1" indicates the AGV rack 8-1. The number "2" indicates the AGV rack 8-2. The number "3" indicates the AGV rack 8-3.

The "section" indicates sections (for example, tiers) included in the AGV racks 8. As illustrated in FIG. 4, for example, the "section" corresponding to the rack number "1" includes "1-1", "1-2", and "1-3".

The NVM 24 stores the rack information in advance. The processor 21 may properly update the rack information in accordance with operations from the operator and the like. The processor 21 may acquire rack information from the host management apparatus 1.

The following is an explanation of functions achieved with the planning apparatus 2. The functions achieved with the planning apparatus 2 are achieved by execution of programs stored in the ROM 22 or the NVM 24 or the like with the processor 21.

First, the processor 21 has a function of acquiring property information indicating properties of the article to be warehoused.

As described above, the host management apparatus 1 transmits warehousing information indicating the article to be warehoused to the planning apparatus 2. Herein, the article to be warehoused may be formed of a plurality of articles of the same type.

The processor 21 acquires warehousing information from the host management apparatus 1 through the communication unit 25. After the warehousing information is acquired, the processor 21 acquires properties of the article indicated with the warehousing information.

For example, the NVM 24 stores information indicating properties of each of articles in advance. The processor 21 acquires the properties of the article indicated with the warehousing information from the NVM 24.

The processor 21 may acquire properties of the article indicated with the warehousing information from the host management apparatus 1.

After the properties of the article are acquired, the processor 21 generates property information indicating the acquired properties.

FIG. 6 illustrates a configuration example of the property information. As illustrated in FIG. 6, the property information stores items "article number" and "property" in association with each other. In addition, the property information stores items "unit mass", "stock quantity", "price", and "handling level" as the "property".

The item "article number" indicates numbers identifying the warehoused articles.

The item "unit mass" indicates weight of an article (unit article) forming the article.

The item "stock quantity" indicates the number of unit articles forming the article.

The item "price" indicates the price of the unit article.

The item "handling level" is an index relating to the handling of the unit article. For example, the item "handling level" is an index indicating fragileness of the unit article.

Herein, the item "handling level" with the higher number indicates that the unit article requires more careful handling (for example, the unit article is more fragile).

The details and the number of properties indicated by the property information are not limited to any specific structures.

The processor 21 also has a function of generating rack allocation information indicating the sections of the AGV racks 8 storing the articles, on the basis of the property information.

The processor 21 calculates an evaluation value of the article on the basis of the property information. Herein, the processor 21 calculates the weight (total weight) of the article as the evaluation value of the article. Specifically, the processor 21 integrates the item "unit mass" and "stock quantity" in each of the articles to calculate the total weight of the article.

The processor 21 generates rack allocation information on the basis of the total weight of each of the articles.

First, the following is an explanation of the case where the AGV racks 8 storing the articles are determined in advance.

The processor 21 acquires information (correspondence information) associating the article with the AGV rack 8 (AGV rack 8 corresponding to the article) to store the article from the host management apparatus 1 or the like.

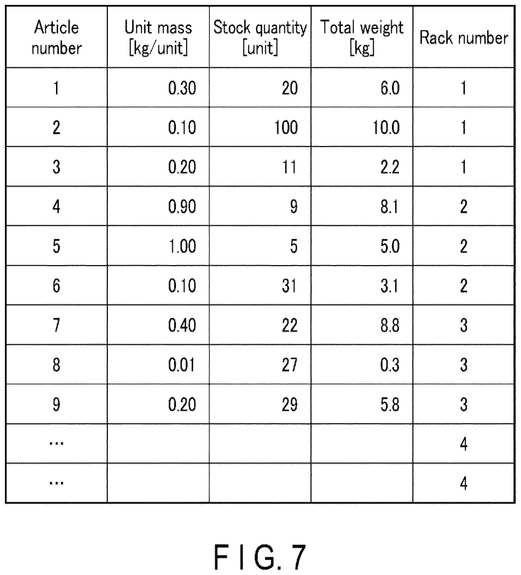

FIG. 7 illustrates a configuration example of the correspondence information. As illustrated in FIG. 7, the correspondence information stores items "article number", "unit mass", "stock quantity", "total weight", and "rack number" in association with each other.

The items "article number", "unit mass", and "stock quantity" are as described above.

The item "total weight" indicates the weight of the article. As described above, the "total weight" is calculated by integrating the "unit mass" and the "stock quantity".

The item "rack number" indicates the AGV rack 8 to store the article of the "article number". The number "1" indicates the AGV rack 8-1. The number "2" indicates the AGV rack 8-2. The number "3" indicates the AGV rack 8-3.

Herein, the AGV rack 8-1 stores articles indicated with the article numbers "1", "2", and "3". The AGV rack 8-2 stores articles indicated with the article numbers "4", "5", and "6". The AGV rack 8-3 stores articles indicated with the article numbers "7", "8", and "9".

The processor 21 determines the section to store the article, on the basis of the total weight of each article. Herein, the processor 21 allocates the articles to the sections in descending order of weight from the bottom section. For example, in the AGV rack 8-1, the processor 21 allocates the heaviest article (article indicated with the article number "2") in the articles to be stored in the AGV rack 8-1 to the section 1-1. In addition, the processor 21 allocates the second heaviest article (article indicated with the article number "1") to the section 1-2. The processor 21 allocates the lightest article (article indicated with the article number "3") to the section 1-3.

In the same manner, the processor 21 allocates articles to the respective sections.

The processor 21 generates rack allocation information indicating the section (section allocated to the article) to store the article for each of the articles.

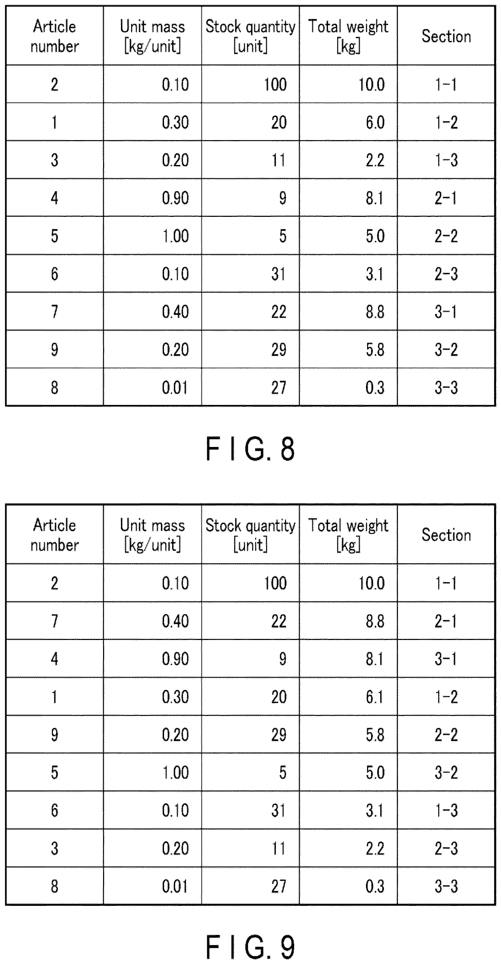

FIG. 8 illustrates a configuration example of the rack allocation information. As illustrated in FIG. 8, the rack allocation information stores the items "article number", "unit mass", "stock quantity", "total weight", and "section" in association with each other.

The items "article number", "unit mass", "stock quantity", and "total weight" are as described above.

The item "section" indicates the section storing the article of the "article number". For example, the rack allocation information indicates the section 1-1 as the section to store the article of the article number "2". The rack allocation information also indicates the section 1-2 as the section to store the article of the article number "1". The rack allocation information also indicates the section 1-3 as the section to store the article of the article number "3".

The configuration of the rack allocation information is not limited to any specific configuration.

The following is an explanation of the case where the AGV racks to store the articles are not determined in advance. As described above, the processor 21 calculates the total weights of the respective articles. After the total weights are calculated, the processor 21 sorts the total weights in descending order (from the heaviest one). After the total weights are sorted, the processor 21 allocates the articles from the bottom sections of the AGV racks 8 in descending order of the total weights. Herein, the processor 21 allocates the articles in ascending order of the rack numbers of the AGV racks 8. Specifically, the processor 21 allocates the articles to the AGV racks 8-1, 8-2, and 8-3 in this order.

The processor 21 generates rack allocation information indicating the section (section allocated to the article) to store the article for each of the articles.

FIG. 9 illustrates a configuration example of the rack allocation information. As illustrated in FIG. 9, the rack allocation information stores the items "article number", "unit mass", "stock quantity", "total weight", and "section" in association with each other.

The items "article number", "unit mass", "stock quantity", "total weight", and "section" are as described above.

As illustrated in FIG. 9, the heaviest article (article with the article number "2") is allocated to the section 1-1 (the lower section in the AGV rack 8 with the rack number "1"). The second heaviest article (article with the article number "7") is allocated to the section 2-1 (the lower section in the AGV rack 8 with the rack number "2"). The third heaviest article (article with the article number "4") is allocated to the section 3-1 (the lower section in the AGV rack 8 with the rack number "3").

The fourth heaviest article (article with the article number "1") is allocated to the section 1-2 (the middle section in the AGV rack 8 with the rack number "1").

In the same manner, the articles are allocated to the respective sections.

The following is an explanation of another example of the case where the AGV racks 8 to store the articles are not determined in advance.

As described above, the processor 21 calculates total weights of the respective articles. After the total weights are calculated, the processor 21 sorts the total weights in descending order (from the heaviest one). After the total weights are sorted, the processor 21 allocates the articles from the bottom sections of the AGV racks 8 in descending order of the total weights.

First, the processor 21 allocates the articles in ascending order of the rack numbers of the AGV racks 8. Specifically, the processor 21 allocates the articles to the AGV racks 8-1, 8-2, and 8-3 in this order.

In addition, the processor 21 switches the ascending order and the descending order of the rack numbers whenever the tiers of the AGV racks 8 change to the higher ones. Specifically, if the articles are allocated to the middle sections, the processor 21 allocates the articles in descending order of the rack numbers of the AGV racks 8. Specifically, the processor 21 allocates the articles to the AGV racks 8-3, 8-2, and 8-1 in this order.

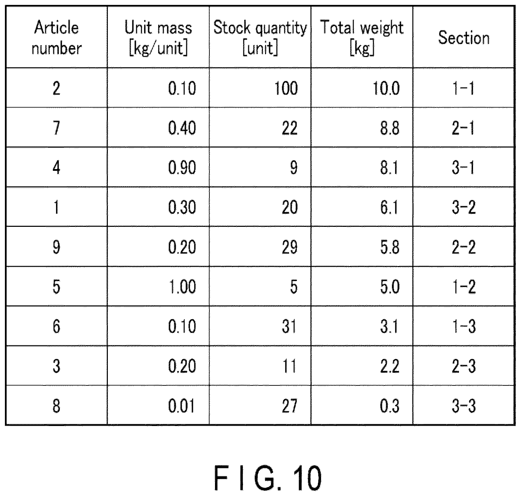

FIG. 10 illustrates a configuration example of the rack allocation information. As illustrated in FIG. 10, the rack allocation information stores the items "article number", "unit mass", "stock quantity", "total weight", and "section" in association with each other.

The items "article number", "unit mass", "stock quantity", "total weight", and "section" are as described above.

As illustrated in FIG. 10, the heaviest article (article with the article number "2") is allocated to the section 1-1 (the lower section in the AGV rack 8 with the rack number "1"). The second heaviest article (article with the article number "7") is allocated to the section 2-1 (the lower section in the AGV rack 8 with the rack number "2"). The third heaviest article (article with the article number "4") is allocated to the section 3-1 (the lower section in the AGV rack 8 with the rack number "3").

Herein, because the tiers of the AGV racks 8 change to the higher ones, the processor 21 switches the rack numbers of the AGV racks 8 to descending order.

The fourth heaviest article (article with the article number "1") is allocated to the section 3-2 (the middle section in the AGV rack 8 with the rack number "3"). The fifth heaviest article (article with the article number "9") is allocated to the section 2-2 (the middle section in the AGV rack 8 with the rack number "2"). The sixth heaviest article (article with the article number "5") is allocated to the section 1-2 (the middle section in the AGV rack 8 with the rack number "1").

Herein, because the tiers of the AGV racks 8 change to the higher ones, the processor 21 switches the rack numbers of the AGV racks 8 to ascending order.

The seventh heaviest article (article with the article number "6") is allocated to the section 1-3 (the upper section in the AGV rack 8 with the rack number "1"). The eighth heaviest article (article with the article number "3") is allocated to the section 2-3 (the upper section in the AGV rack 8 with the rack number "2"). The ninth heaviest article (article with the article number "8") is allocated to the section 3-3 (the upper section in the AGV rack 8 with the rack number "3").

As a result of allocating the articles to the sections as described above, the processor 21 can uniformize the weights of the AGV racks 8 storing the articles.

The processor 21 may calculate the total price (product of the stock quantity and the price) of the article as an evaluation value of the article. As another example, the processor 21 may use the handling level (or the product of the handling level and the stock quantity) of the article as an evaluation value of the article.

The evaluation value used with the processor 21 is not limited to any specific structure.

The processor 21 also has a function of generating planning information indicating the rack allocation information and the positions to arrange the AGV racks 8.

After the rack allocation information is generated, the processor 21 calculates importance of each of the AGV racks 8. Herein, the processor 21 calculates the total of the total weights of the articles stored in the AGV rack 8 as the importance.

The processor 21 determines the positions to arrange the AGV racks 8, on the basis of the importances of the respective AGV racks 8. Herein, the processor 21 allocates position a to the AGV rack 8 with the highest importance. The processor 21 allocates position b to the AGV rack 8 with the second highest importance. The processor 21 allocates position c to the AGV rack 8 with the third highest importance.

The positions a to c will be described later.

After the positions to arrange the respective AGV racks 8 are determined, the processor 21 generates planning information indicating the rack allocation information and the positions to arrange the respective AGV racks 8.

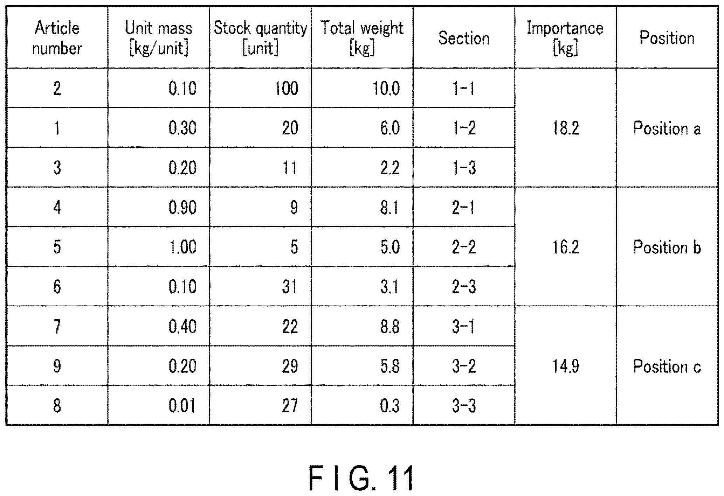

FIG. 11 illustrates a configuration example of the planning information. As illustrated in FIG. 11, the planning information stores items "article number", "unit mass", "stock quantity", "total weight", "section", "importance", and "position" in association with each other. The items "article number", "unit mass", "stock quantity", "total weight", and "section" form the rack allocation information.

The item "importance" indicates the importance (total of the total weights) of the AGV rack 8. Herein, the planning information indicates the value "18.2" as the importance of the AGV rack 8-1. The planning information also indicates the value "16.2" as the importance of the AGV rack 8-2. The planning information also indicates the value "14.9" as the importance of the AGV rack 8-3.

The item "position" indicates the position at which the AGV rack 8 is disposed. Herein, the planning information indicates "position a" as the position of the AGV rack 8-1 with the highest importance. The planning information also indicates "position b" as the position of the AGV rack 8-2 with the second highest importance. The planning information also indicates "position c" as the position of the AGV rack 8-3 with the third highest importance.

The following is an explanation of the positions a to c.

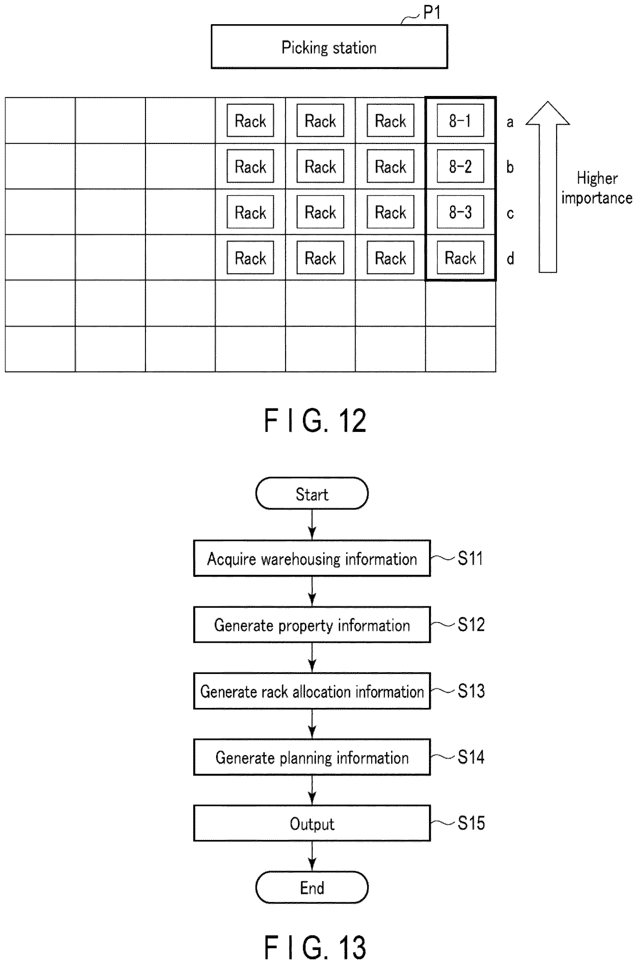

FIG. 12 is a diagram for explaining the positions a to c. FIG. 12 illustrates positional relation between the positions a to c and the picking station P (picking station P1 herein).

As illustrated in FIG. 12, the position a is a position closest to the picking station P. Specifically, the position a is a position facing the picking station P.

The position b is a position more distant from the picking station P than the position a is. Herein, the position b is a position behind the position a with respect to the picking station P.

The position c is a position more distant from the picking station P than the position b is. Herein, the position c is a position behind the position b with respect to the picking station P.

Specifically, the processor 21 allocates a position closer to the picking station P1 to the AGV rack 8 with the higher importance.

The structure of the positions a to c is not limited to any specific structures.

As another example, the processor 21 may allocate a position closer to the place in which the operator is positioned to the AGV rack 8 with the higher importance. As another example, the processor 21 may allocate a security area (such as an area requiring a key or authentication to enter) as the position of the AGV rack 8, on the basis of the importance of the AGV rack 8.

The method for allocating positions to the AGV racks 8 with the processor 21 is not limited to any specific method.

The processor 21 also has a function of outputting the planning information.

After the planning information is generated, the processor 21 transmits the planning information to the AGV controller 4 through the communication unit 25.

The AGV controller 4 may carry the AGV rack 8 storing the articles to the picking station P, on the basis of the planning information. The AGV controller 4 may also dispose the AGV rack 8 storing the products to a predetermined position on the basis of the planning information.

As another example, the processor 21 may transmit the planning information to a terminal held by the operator.

In this case, the operator stores the articles in the sections of the AGV rack 8 on the basis of the planning information displayed on the terminal, and disposes the AGV rack 8 in the predetermined position.

As another example, the processor 21 may display the planning information on the display unit 27.

As another example, the processor 21 may transmit the planning information to an external device through the communication unit 25 or the like.

The following is an operation example of the planning apparatus 2.

FIG. 13 is a flowchart for explaining an operation example of the planning apparatus 2.

First, the processor 21 of the planning apparatus 2 acquires warehousing information from the host management apparatus 1 through the communication unit 25 (S11). After the warehousing information is acquired, the processor 21 generates property information on the basis of the warehousing information (S12).

After the property information is generated, the processor 21 generates rack allocation information on the basis of the property information and the rack information and the like (S13). After the rack allocation information is generated, the processor 21 generates planning information on the basis of the rack allocation information (S14) .

After the planning information is generated, the processor 21 outputs the planning information (S15).

After the planning information is output, the processor 21 ends the operation.

The processor 21 may allocate a section with a key to the article on the basis of the evaluation value of the article.

The processor 21 may generate planning information for the whole AGV rack 8, or may generate planning information for part of the AGV racks 8.

As another example, the processor 21 may allocate no articles to a section of the AGV rack 8. The processor 21 may determine the position to dispose the AGV rack 8 storing articles in advance. For example, the processor 21 calculates the importance of the AGV rack 8 on the basis of the articles stored in advance in the AGV rack 8. The processor 21 may determine the position at which each AGV rack 8 is disposed on the basis of the importance thereof. In this case, the planning information is not required to indicate the section to store the article. As another example, the processor 21 is not required to determine the position to dispose the AGV rack 8. In this case, the planning information is not required to indicate the position to dispose the AGV rack 8.

The processor 21 may calculate the importance of the AGV rack 8 on the basis of the position of the center of gravity (for example, the height of the center of gravity) of the AGV rack 8 storing articles. For example, the processor 21 may calculate the importance of the AGV rack 8 having the center of gravity of the higher position as higher importance.

The processor 21 may calculate the importance of the AGV rack 8 on the basis of the total price of the articles stored in the AGV rack 8. For example, the processor 21 may calculate the importance of the AGV rack 8 with the higher total price as higher importance.

The processor 21 may calculate the importance of the AGV rack 8 on the basis of the handling level (such as the total of the handling levels) of the articles stored in the AGV rack 8. For example, the processor 21 may calculate the importance of the AGV rack 8 with the higher handling level as higher importance.

The processor 21 may generate planning information for racks that are not carried by the AGVs 7.

The control system configured as described above determines sections to store articles on the basis of properties of the articles. For example, the control system stores the heavier articles in the lower sections of the racks. As a result, the control system can prevent the racks from falling down in conveyance of the racks or in disasters, such as earthquakes.

In addition, the control system stores articles with higher total prices or higher handling levels in the lower sections of the racks. This structure enables the control system to prevent breakage of expensive articles or fragile articles in the case where the racks fall down.

In addition, the control system determines the positions at which the racks are arranged according to the importances of the racks. This structure enables the control system to prevent a long-distance conveyance of racks with higher importances and arrangement of racks with higher importances in areas at low security levels.

Some embodiments of the present invention have been described above, but these embodiments have been presented as examples and are not intended to limit the scope of the invention. These novel embodiments can be carried out in other various forms, and various omissions, replacement, and changes are possible within the range not departing from the gist of the invention. These embodiments and/or modifications thereof are included in the scope and/or the gist of the invention, and included in the inventions recited in the claims and ranges equivalent to them.

## Claims

1. An information processing apparatus comprising:
an interface acquiring warehousing information indicating articles to be stored in a rack including two or more sections having different heights, the rack to be carried by an automated guided vehicle; and
a processor acquiring property information indicating property of each of the articles, and generating planning information indicating the sections to store the articles, based on the property information.

2. The information processing apparatus according to claim 1, wherein the property relates to weight or price of each of the articles.

3. The information processing apparatus according to claim 1 or 2, wherein
the property is weight of each of the articles, and
the processor allocates the articles to the sections in descending order of weight from the bottom section.

4. The information processing apparatus according to claim 3, wherein the processor allocates the articles to the sections of a plurality of the racks in descending order of weight from the lowest sections thereof.

5. The information processing apparatus according to any one of claims 1 to 4, wherein the processor generates the planning information further indicating a position to dispose the rack storing the articles, based on the property information.

6. The information processing apparatus according to claim 5, wherein
the processor calculates importance of the rack storing the articles, based on the property information, and,
determines the position to dispose the rack, based on the importance.

7. The information processing apparatus according to claim 6, wherein the importance is total of weights of the articles stored in the rack.

8. The information processing apparatus according to claim 6 or 7, wherein the processor allocates a position closer to a picking station to pick up the articles from the rack to the rack having the higher importance.

9. An information processing method to be executed with a processor, the method comprising:
acquiring warehousing information indicating articles to be stored in a rack including two or more sections having different heights, the rack to be carried by an automated guided vehicle;
acquiring property information indicating property of each of the articles; and
generating planning information indicating the sections to store the articles, based on the property information.

10. A program to be executed with a processor to achieve:
a function of acquiring warehousing information indicating articles to be stored in a rack including two or more sections having different heights, the rack to be carried by an automated guided vehicle;
a function of acquiring property information indicating property of each of the articles; and
a function of generating planning information indicating the sections to store the articles, based on the property information.

11. An information processing apparatus comprising:
an interface acquiring property information indicating property of each of articles stored in a rack including two or more sections having different heights, the rack to be carried by an automated guided vehicle; and
a processor generating planning information indicating a position to dispose the rack, based on the property information.
